# EUROPEAN PATENT APPLICATION

(11) **EP 1 600 848 A1**
(43) Date of publication of application: **30.11.2005**
(21) Application number: 04012811.8
(22) Date of filing: 28.05.2004
(51) Int. Cl.: G06F 3/033, G06F 3/023

(54) **A method and program for selecting an input symbol, and a device for the same**

(71) Applicant: SIEMENS AKTIENGESELLSCHAFT, 80333 München (DE)
(72) Inventor: Andersen, Peter Birk, 9000 Aalborg (DK)

(57) **Abstract**

A method for selecting an input symbol (401) comprises the steps of: 1) displaying a set (101) of input symbols (901); 2) selecting an input symbol (401) from said set (101) of input symbols (901) displayed, by: i) moving a cursor (103) to overlap the input symbol (401); and ii) selecting the input symbol (401) with which the cursor (103) overlaps; 3) collecting image data (ID); and 4) mapping a displacement (d) in the image data (ID) to a displacement (d') in relative position between the cursor (103; 103') and the set (101; 101') of input symbols (901).

## Description

### Field of the invention

The invention relates to selecting input symbols from a set of input symbols displayed.

### Background of the invention

Selecting an input symbol, such as that for user input, especially a number, letter, or any other character useable for user input, may be very slow and uncomfortable. Usually the input symbol is selected using a keypad or keyboard. Especially problematic this becomes when the keypad or keyboard has to be relatively small. In some models of mobile terminals, for example, the conventional keypad has been completely omitted. Usually the number of keys has been limited, forcing the user to go through a list comprising some or more available input symbols, this requiring repeated pressing of a key in order to select a desired input symbol. Similar limitations apply to touch screens as well, especially if the size of the device does not allow accommodating a full-size keypad or keyboard onto the touch screen.

In order to provide the user with comfortable means for entering user input, the size of the device grows which then would have a negative impact on the design possibilities.

In Microsoft Windows, especially in its "Character Map" application which provides the user with a kind of soft keypad, a set of characters is shown. The user moves the cursor on top of a suitable character, after which by clicking the mouse he or she chooses the input symbol on top of which the cursor rests. The problem associated with the mouse is that it requires some area to operate. Furthermore, the need for a mouse in a device is a severe constructional limitation.

### Short summary of the invention

It is an object of the invention to improve the method for selecting an input symbol and to find an alternative to selecting an input symbol using a mouse or repeated key presses. Further objects of the invention are to bring out a program and device for selecting an input symbol. These objects can be achieved as set out in claims 1, 13, and 14, respectively.

Dependent claims 2 to 12, and 15 to 27 describe various advantageous embodiments of the objects of the invention.

### Advantages of the invention

By i) collecting image data, and ii) mapping a displacement in the image data to a displacement in relative position between the cursor and the set of input symbols, a displacement in the image data can be used for selecting an input symbol. An advantage is that in this manner the controlling of the cursor movement in a soft keypad may be carried out by causing a displacement in the image data. Structural means, such as direction keys or joystics that require pressing or tilting in relation to the device wherein the soft keypad resides can be avoided.

If a pattern or an object is recognized in the collected image data, and ii) the step of analyzing a displacement of said pattern or object is performed in order to map a displacement in the image data to a displacement in relative position between the cursor and the set of input symbols, the displacements in the image data can be observed more accurately. This improves the precision with which the user can select the input symbol.

If i) the step of recognizing a pattern or an object in the image data is performed for a first image and a second image, and ii) the step of analyzing a displacement of said pattern or object is performed using the data obtained in the step of recognizing the pattern or the object in the image for the first image and the second image, or any data derived therefrom, needed processing power can be reduced, since pixel level analysis and analysis of a video stream can be avoided.

If an image is overlayed with the set of input symbols, the user comfort can be improved, since a background of a uniform colour or with an attractive picture may be selected. Furthermore, by suitably selecting the picture or its colours or brightness, contrast can be improved for enhancing the legibility of the input symbols displayed.

If the image used for overlaying is from collected image data, a more coherent way of getting feedback between the dependency of the diplacement in the image data and from displacement of the cursor or input symbols can be obtained. In other words, in this way it is easier for the user to recognize how much the displacement was, because he or she can compare the relative displacement on the screen with the real displacement of the camera relative to the background that he or she sees behind the device.

For example, without this feature of the invention, if an integrated camera were used as a sort of "optical mouse", the user might not notice any correlation between the magnitude of movement vector of the cursor or input symbols and the displacement of the direction where he or she would be pointing the camera.

In particular, this possible loss of coherent feedback has not been a problem when a conventional mouse has been used by displacing it on a table because the table surface forms the reference frame for the user.

The set of input symbols can be zoomed or rotated. A following advantage from the zooming is then that if the user detects that the displacement of the cursor or the set of input symbols is still too large even though he or she causes a small hand movement only, the user may zoom the camera. Correspondingly, the character grid on top of the digital image would be zoomed.

An advantage following from the rotating the set of input symbols is that then the user may change the orientation of the set of input symbols the, which the makes the user feel more natural when selecting an input symbol.

The displacement can be used to displace the set of input symbols. Then the input symbols shown can be shown larger as actually would fit in the relatively small display of the device. Therefore, it is optional to also scroll the grid based on the movement of the camera mouse. By relatively smooth scrolling, user coordination is not impaired since the feedback to a hand movement follows, resulting the displacement of the cursor or the set of input symbols on the display.

### List of Figures

In the following, the invention is described in more detail with reference to the examples shown in Figures 2 to 9 of the accompanying drawings, of which:
Figure 1 shows a prior art method for selecting an input symbol;
Figure 2 illustrates two objects in a landscape and the boundaries of two images;
Figure 3a shows a first embodiment for overlaying an image with the set of input symbols;
Figure 3b shows a second embodiment for overlaying an image with the set of input symbols;
Figure 4a illustrates a coordinate system;
Figure 4b illusrates a displacement in image data collected;
Figure 4c shows a mapping of the displacement in collected image data to a displacement of the input symbols;
Figure 4d shows a mapping of the displacement in collected image data to a displacement of the cursor;
Figure 4e illustrates a displacement in the mapping of Figure 4c;
Figure 4f illustrates a displacement in the mapping of Figure 4d;
Figure 5a is a top view of a device for selecting an input symbol;
Figure 5b is a sectional view of the device of Figure 5a;
Figure 5c is a rear view of the device of Figure 5a;
Figure 6 is a block diagram of the device of Figure 5a;
Figure 7 illustrates zooming in collected image data;
Figure 8 illustrates zooming of the set of input symbols on a display; and
Figure 9 illustrates zooming, displacement, and rotation of the set of input symbols.

Same reference numerals refer to similar structural elements throughout the Figures.

### Detailed description

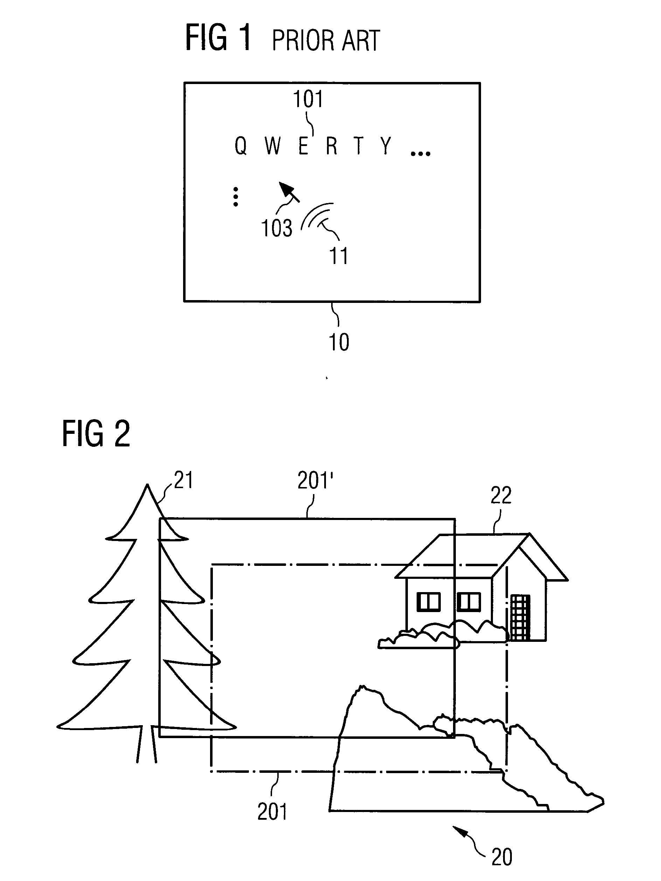

Figure 1 shows a prior art method for selecting an input symbol. The set 101 of input symbols is shown on a display 10. The user moves cursor 103, usually by displacing a mouse, to overlap an input symbol belonging to the set 101 of input symbols. The speed stripes 11 illustrate the movement of the cursor 103. When the cursor overlaps with one input symbol of the set 101, the user selects the input symbol, usually by clicking a mouse button.

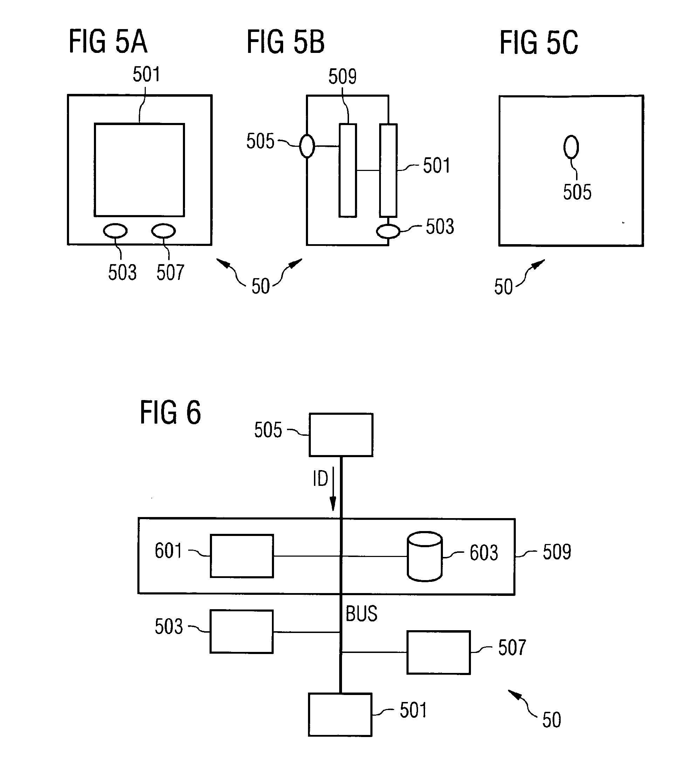

Figure 5a is a top view of a device 50 for selecting an input symbol. The device 50 comprises a display 501, and means 503 for confirming a selection, such as a button or switch. The device 50 may further comprise means 507 for canceling the present operation. Examples of means 507 for canceling the present operation include buttons or switches.

In the example of Figure 5a the display 501, the means 503 for confirming a selection, and means 507 for canceling the present operation have been shown to reside on the front side of the device, preferably below the display 501. For the skilled person it is nevertheless clear that they may be located also in different positions.

Particular examples of these different positions for the means 503 for confirming a selection and means 507 for canceling the present operation are sides of the display 501, and sides of the device 50. The means 503 and 507 may further be located on different sides of the display in relation with each other.

Figure 5b is a sectional view of the device 50 shown in Figure 5a. The device 50 comprises a camera 505 and a printed circuit board PCB 509. The PCB 509 comprises further components which are discussed in more detail with reference to Figure 6 below.

Figure 5c is a rear view of the device of Figure 5a. The opening for the camera 505 lense is shown.

It is clear that the construction of the device 50 is only an example. The actual shape or form of the device 50 may alter.

An example of the device 50 is a portable terminal, especially that capable of cellular communications using microwave radio signal. In this respect it is also possible that the device 50 comprises means for opening and closing the terminal, known as such in clam-shell or slider phones.

Figure 6 is a block diagram of the device of Figure 5a. The PCB 509 comprises a processor 601. The processor 601 is adapted to execute programs stored in register 603. Examples of suitable registers 603 include memory chips and different magnetic, optical, or magneto-optical storing means, or any combination of these. The camera 505 is connected to the PCB and processor preferably through a messaging bus, likewise the means 503 for confirming a selection and means 507 for canceling the present operation, and display 501.

The camera 505 is used for collecting image data ID. Image data ID can be in form of a video stream, or in form of single images. The invention is not limited to any particular image data format, but the image data can be raw data, or coded with any available image codec. Examples of some of the most common codecs include different versions of JPEG or GIF, and for video MPEG 1 or 2 codecs. A codec usually compresses image data using a known algorithm so that the compressed image data can be restored at least up to some extent. A coded image then takes less space than waw image data would take.

Especially in some video codecs image data forming an image stream is obtained by tracking objects or performing pattern recognition. Then it is possible to send information about the difference between consecutive pictures, to send information about low frequencies in connection with rapid motion, to send motion vectors in connection with uniform motion, and to send code words for different types of events in the picture.

For carrying out the invention it is rather immaterial which coding method is used, if any. However, since the performance requirements they set on the device 50 vary tremendously, in order to obtain an economical solution, the invention is in the following descibed by means of examples wherein two consecutive images, in particular using raw image data, are used. The invention can be carried out in different technical frameworks as well.

Figure 2 illustrates a landscape 20 of which image data ID can be collected. Over the landscape 20 the boundaries of two images 201, 201' have been marked. In the landscape 20 there are shown two objects 21, 22, of which in this example the first object 21 is a tree, and the second object 22 is a house.

The images 201, 201' are preferably detected by the camera 505 which comprises a lense, means for detecting an image, and means for passsing the image data ID collected to the PCB 509, preferably through the messaging bus. An example of such means for detecting an image is a CMOS or CCD module, currently comprising means for forming at least 500.000 pixel elements. If the invention were carried out with a video camera, the technique would be a bit different but this does not matter in this context.

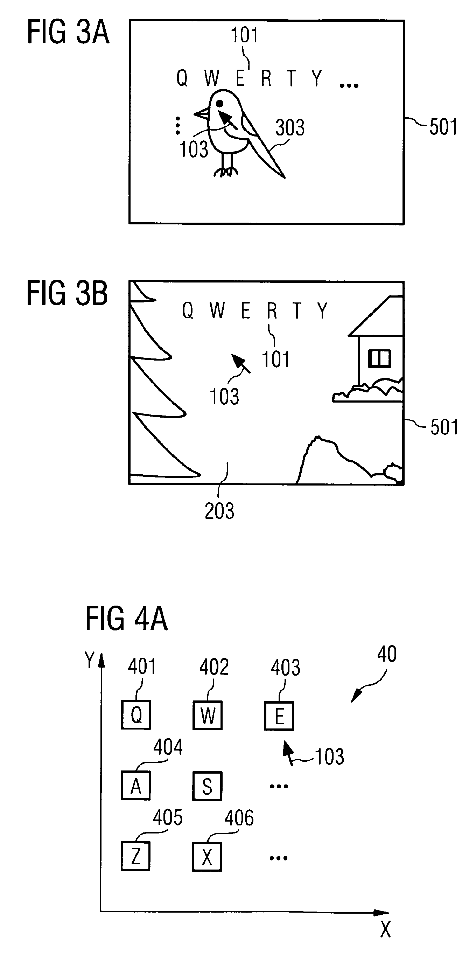

Figure 3a shows a first embodiment for overlaying an image with the set of input symbols. A pre-stored image 303 can be overlaid with the set 101 of input symbols and shown on the display 501, in the manner that it is shown under the set 101 of input symbols. Furthermore, the cursor 103 preferably moves on top of the set 101 of input symbols so that the user can better recognize its present position.

First, the processor 601 receives image data ID from the camera 505. Then it maps a displacement **d** in the image data ID to a displacement **d'** in relative position between the cursor 103 and the set 101 of input symbols. By doing so, responsive to a displacement **d** in the image data ID, the cursor 103 or the set 101 of input symbols is moved with the displacement **d'** on the display 501. Preferably it is the processor 601 that takes care of computing the position of the displacement **d',** but this can be carried out in a separate processor unit as well, if available.

The displacement **d** may in other words be equal to the displacement of an object or of a pattern in the image data ID collected. A pattern or object may mean an area in the image data ID the brightness or colour of which is different than that of the surrounding image in the image data ID. Because some pattern or object recognition algorithms compute size attributes and colour kind attributes for the image data ID in order to detect a pattern or an object more efficiently, displacement **d** of an object or of a pattern can be extracted from the pattern recognition data of two consecutive or subsequent images. The saving in computational effort is high, so that the tradeoff of the method not working particularly well for an image consisting of a uniform colour only, such as a white wall, can be neglected.

The pre-stored image 303 may be stored in a register 603 of the device 50, and even transferred to the device 50 from a remote unit or network, if the device 50 further comprises means for receiving image data from a remote unit or network.

The image data ID may be stored into register 603 after collecting and before showing it on the display 501.

For the embodiment using image files, image data ID is collected from the camera 505 to the processor 601 or into the register 603. A first image 201 is collected first, for which the processor 601 performs pattern recognization. Then a second image 201' is collected, and the pattern recognization step is repeated. The displacement **d** of the pattern in the first image 201 and the second image 201' corresponds in this example the displacement in the image data ID.

Then the processor 601 maps the displacement **d** to a displacement **d'** in relative position between the cursor 103 and the set 101 of input symbols.

Figure 3b shows a second embodiment for overlaying an image with the set of input symbols. The second embodiment is in other aspects similar to the embodiment of Figure 3a, but now the image 203 shown on the display 501 is directly formed from image data ID collected.

In other words, image data ID from output stream of the camera 505 is overlaid with a character grid showing the set 101 of input symbols on top of the digital image 203 obtained from the camera 505 on the display 501 of the device 50. The camera 505 is used to select an input symbol from the set 101 of the input symbols, preferably by displacing the cursor 103 on top of an input symbol, and then clicking means 503 for confirming a selection.

A further advantage of this embodiment is that in this manner it is easier for the user to recognize how much the displacement was, because he or she can compare the relative displacement on the screen 501 with the real displacement of the camera 505 relative to the background 20 that he or she sees behind the device 50. If the camera 505 is pointing to the user, e.g. to his or her hand, then by following the position of the hand on the display 501 it is easier for the user to point out the desired input symbol more accurately.

In comparison with "Character Map" that could be used together with an optical mouse, such as that described in published patent application EP 1 313 062, where a movement vector is generated based on camera output, it would be very difficult for the user to carefully position the cursor 103 on top of a character. Especially with a small display 501 such as in a mobile terminal, the characters on the display 501 are very small in size thus making the correct positioning even more difficult.

Figure 4a illustrates a coordinate system 40. Positions 401, 402, 403, 404, 405, 406 of different input symbols belonging to the set 101 of input symbols are shown.

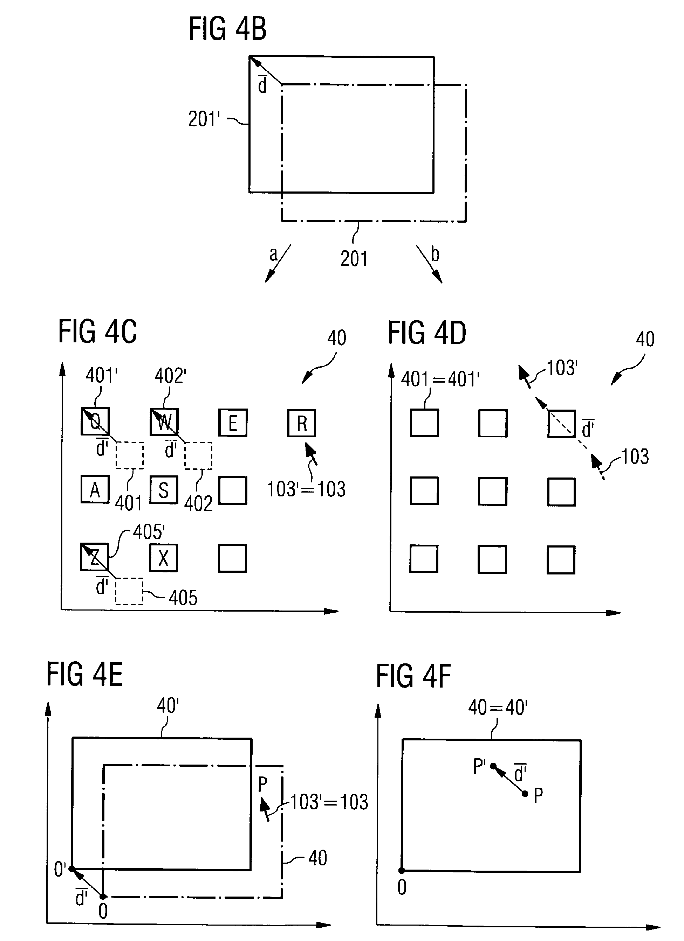

Figure 4b illustrates a displacement **d** in image data ID collected. Relative to the first image 201, the second image 201' has moved up-left.

Figure 4c shows a mapping of the displacement in image data ID collected to a displacement of input symbols. The cursor 103' after displacement is at the same position as the cursor 103 before the displacement. Instead of moving the cursor 103, the input symbols are moved, the positions 401, 402, 403, 404, 405 of the single input symbols then moving with a displacement **d'** to the direction of the displacement **d,** i.e. to positions 401', 402', 403', 404', and 405'.

Figure 4d shows a mapping of the displacement in collected image data to a displacement of the cursor. Now the positions 401', 402', 403', 404', and 405' after the displacement are the same as their positions 401, 402, 403, 404, 405, 406 before the displacement. But the position of the cursor changes; the cursor being shown 103' after the displacement and with 103 before the displacement.

Figure 4e illustrates a displacement in the mapping of Figure 4c. Now the coordinates 40 of the input symbols change to 40' during the change. This can be interpreted as moving the origin from O to O'. The position P of the cursor 103 remains the same.

Figure 4f illustrates a displacement in the mapping of Figure 4d. The origin O stays in its original position, in a similar manner as the coordinates 40 of the input symbols, but the position P of the cursor changes to P'.

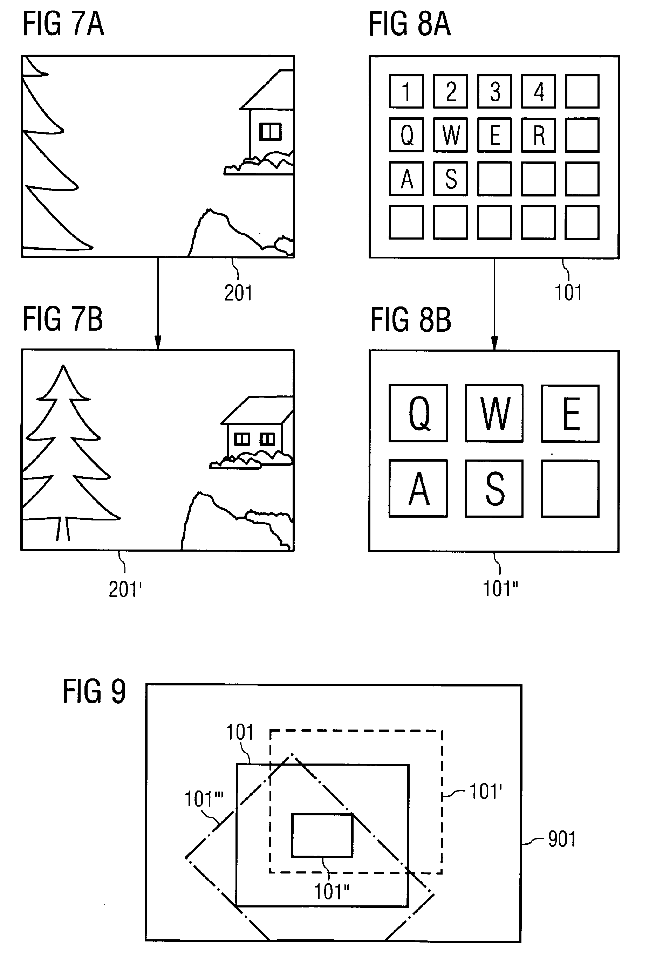

Figure 7 illustrates zooming in image data ID collected. If the second image 201' shows zooming in or out as compared with the first image 201, then the processor 601 changes the set 101 that is zoomed in or out to a zoomed set 101' and then shows the zoomed set 101' of input symbols on display 501, as illustrated in Figure 8.

Figure 9 illustrates zooming, displacement, and rotation of the set of input symbols. The input symbols 901, such as a keyboard, may be partially visible on the display 501. The original set 101 of input symbols, is changed to displaced set 101' of input symbols, to a zoomed set 101" of input symbols, or a rotated set 101''' of input symbols, or to any combination of these, based on the differences between the second image 201' and the first image 201.

Input symbols 901 comprise all letters and characters that can be selected by the user. The set 101 of input symbols 901 is a subset of all input symbols. For example, both capital and lower case letters do not need to be shown on the display, but by using a case change key also the keys not displayed can be selected.

## Claims

1. A method for selecting an input symbol (401), comprising the steps of:
- displaying a set (101) of input symbols (901);
- selecting an input symbol (401) from said set (101) of input symbols (901) displayed, by:
- i) moving a cursor (103) to overlap the input symbol (401); and
- ii) selecting the input symbol (401) with which the cursor (103) overlaps;
**characterized in that**:
the method further comprises the steps of:
- collecting image data (ID); and
- mapping a displacement (**d**) in the image data (ID) to a displacement (**d'**) in relative position between the cursor (103; 103') and the set (101; 101') of input symbols (901).

2. A method of claim 1, **wherein:**
- the step of collecting image data (ID) comprises: a step of recognize a pattern or an object (21, 22) in the image data (ID); and
- the step of mapping a displacement (**d**) in the image data (ID) to a displacement (**d'**) in relative position between the cursor (103; 103') and the set (101; 101') of input symbols (901) comprises: a step of analyzing a displacement (**d**) of said pattern or object (21, 22) recognized.

3. A method of claim 2, **wherein:**
- the step of recognizing a pattern or an object (21, 22) in the image data (ID) is performed for a first image (201) and a second image (201'); and
- the step of analyzing a displacement (d) of said pattern or object (21, 22) is performed using data obtained in the step of recognizing the pattern or the object (21, 22) in the image data (ID) for the first image (201) and the second image (201'), or any data derived therefrom.

4. A method according to any one of the preceding claims, further **comprising:** the step of overlaying an image (203, 303) with the set (101) of input symbols (901).

5. A method according to any one of the preceding claims, further **comprising** the step of:
zooming or rotating the set (101) of input symbols (901) to a zoomed set (101'') or to a rotated set (101"') of input symbols (901).

6. A method of claim 5, **wherein:** the step of zooming the set (101) of input symbols (901) to the zoomed set (101'') of input symbols (901) is performed in response to zooming performed in collecting image data (ID) or detected at image data (ID) collected.

7. A method according to claim 5 or 6, **wherein**: the mapping to be used is changed in response to zooming the set (101; 101") of input symbols (901) in or out (101 -> 101 " ; 101 " -> 101).

8. A method according to any one of the preceding claims 4 to 7, **wherein:** the image (203; 303) overlaid with the set (101) of input symbols (901) is formed from collected image data (ID).

9. A method according to any one of the preceding claims 4 to 8, **wherein:** the image (303) overlaid with the set (101) of input symbols (901) is a pre-stored image (303).

10. A method according to any one of the preceding claims, **wherein:** the displacement (d) is used to displace the cursor (103 -> 103').

11. A method according to any one of the preceding claims 1 to 9, **wherein:** the displacement **(d)** is used to displace the set (101) of input symbols (901).

12. A method of claim 11, **wherein:** the displaced set (101') of input symbols (901) is obtained by displacing the set (101) of input symbols (901) by scrolling.

13. A program executable on a processor, adapted to carry out the method steps of any one of the claims 1 to 12.

14. A device (50) for selecting an input symbol (401), comprising:
- means (501) for displaying a set (101) of input symbols (901);
- means (601) for moving a cursor (103) to overlap an input symbol (401) of said set (101) of input symbols (901); and
- means (503) for selecting the input symbol (401) overlapped by the cursor (103);
**characterized in that**:
the device (50) further comprises:
- means (505) for collecting image data (ID);
- means (601) for mapping a displacement (**d**) in the image data (ID) to a displacement (**d'**) in relative position between the cursor (103; 103') and the set (101; 101') of input symbols (901).

15. A device (50) of claim 14, further **comprising:**
- means (601), responsive to means (505) for collecting image data (ID), for recognizing a pattern or an object (21, 22) in the image data (ID) collected; and
- means (601) for analyzing a displacement (**d**) of said pattern or object (21, 22) recognized.

16. A device (50) of claim 15, **wherein:**
- the means (601) for recognizing a pattern or an object (21, 22) in the image data (ID) are adapted to use a first image (201) and a second image (201') in detecting the pattern or the object (21, 22); and
- the means (601) for analyzing a displacement (**d**) of said pattern or object (21, 22) is performed using data obtained in the step of recognizing the pattern or the object (21, 22) in the image data (ID) for the first image (201) and the second image (201'), or any data derived therefrom.

17. A device (50) according to any one of the preceding claims 14 to 16, further **comprising:** means (601) for overlaying an image (203, 303) with the set (101) of input symbols (901).

18. A device (50) according to any one of the preceding claims 14 to 17, further **comprising:**
means (601) for zooming the set (101) of input symbols (901) to a zoomed set (101") of input symbols (901); or for rotating the set (101) of input symbols (901) to a rotated set (101''') of input symbols (901).

19. A device (50) of claim 18, **wherein:** the means (601) for zooming the set (101) of input symbols (901) to the zoomed set (101'') of input symbols (901) are responsive to zooming of the means (505) for collecting image data (ID), especially that performed by using a zoom control means (507) .

20. A device (50) according to any one of the preceding claims 14 to 19, **wherein:** the means (601) for mapping a movement is adapted to change the mapping to be used in response to means (601) for zooming the set (101; 101") of input symbols zooming in or out (101 -> 101''; 101" -> 101) .

21. A device (50) according to any one of the preceding claims 17 to 20, **wherein:** the image (203; 303) is received from means (505) for collecting image data (ID).

22. A device (50) according to any one of the preceding claims 17 to 21, **wherein:** the image (303) is a pre-stored image (202; 303).

23. A device (50) according to any one of the preceding claims 14 to 22, **wherein:** the means (601) for moving the cursor (103) are responsive to the displacement **(d).**

24. A device (50) according to any one of the preceding claims 14 to 22, **wherein:** the means (501) for displaying the set (101) of input symbols (901) are responsive to the displacement **(d).**

25. A device (50) of claim 24, **wherein:**
the means (501) for displaying the set (101) of input symbols (901) are adapted to displace the set (101) of input symbols (901) by scrolling.

26. A device (50) according to any one of the preceding claims 14 to 25, **wherein:** the means (505) for collecting image data (ID) comprise a camera (505) integrated to the device (50), the camera (505) especially being a digital camera.

27. A device (50) according to any one of the preceding claims 14 to 26, **wherein:** the device (50) is a mobile terminal, a portable digital assistant, or a music player.
